# EUROPEAN PATENT APPLICATION

(11) **EP 1 562 375 A1**
(43) Date of publication of application: **10.08.2005**
(21) Application number: 05250346.3
(22) Date of filing: 20.01.2005
(51) Int. Cl.: H04N 5/445, H04N 7/173

(54) **Interactive multimedia processing system and method**

(30) Priority: 04.02.2004 GB 0402482
(71) Applicant: Pioneer Digital Design Centre Ltd, Slough SL2 4QP (GB)
(72) Inventor: Koh, We Keng, c/o Pioneer Digital Design Ctr. Ltd., Stoke Poges Slough SL2 4QP (GB)
(74) Representative: Haley, Stephen

(57) **Abstract**

An interactive multimedia processing system, for use with a digital television service, provides an output signal to a display. The system comprises parsing means for parsing digital television service data into constituent data types, and processing means, which process the parsed data into multimedia content data according to its associated media type. The system further comprises dividing means which divide an image to be displayed into regions, and assigning means, which assign the multimedia content data to different display regions according to its associate media type. In this way, the multimedia contents are presented, in the form of image output data, to a display.

## Description

The present invention relates to an interactive multimedia processing system and method, which may be employed in conjunction with a digital television service, in order to create a multimedia user interface.

Traditionally, a TV programme comprises only video and audio components. With the advent of digital TV, it is now possible to supplement the programme with other contents (such as electronic programme guides, internet and interactive TV) to create a multimedia experience. The different components that make up a multimedia service can be described in an MPEG-2 Programme Map Table (PMT) - this table carries the different types of data which constitute different aspects of the multimedia TV service.

The use of, for example, digital cable, satellite and terrestrial TV systems to provide "interactive" systems is now becoming increasingly popular. These systems provide viewers with a choice of programmes and associated services (such as data services and interactive applications) which they may navigate between, generally via a table or map which displays the full range of choices. A specific service may then be selected by the viewer, and is consequently displayed on the screen. Most existing TV interfaces will only display the audio and video components of the TV service. Additional content on related services is generally 'hidden' behind an icon on the display, which the user may access by pressing a certain button, for example on an interactive device such as a remote controller. This allows the user to find out if an interactive application, or other related data, exists in relation to the programme which they are viewing. An obvious disadvantage of the systems described above is that the viewer is unaware of the possible interactive and other related services whilst watching the chosen programme. Additionally, he may have to sacrifice viewing the programme in order to view the interactive application, or to view a table or map of associated services.

The present invention provides an interactive multimedia processing system which aims to solve some or all of the above problems, by displaying a complete overview of the digital TV service.

According to the present invention there is provided an interactive multimedia processing system for use with a digital television service and for providing an output signal to a display, the system comprising:
parsing means for parsing digital television service data into constituent data types;
processing means for processing the parsed data into multimedia content data according to its associated media type;
dividing means for dividing an image to be displayed into regions; and
assigning means for assigning the multimedia content data to different display regions according to its associated media type, such that the multimedia contents are presented in the form of image output data to a display.

The digital service data may be provided in the form of an MPEG-2 Programme Map Table (PMT).

The display regions may be of different sizes, and may include one main region on which a selected viewing mode is displayed. The system may further comprise selection means for selecting a viewing mode.

The system may further comprise navigation means for enlarging, minimising or removing a selected region from the image output data.

The system further comprises memory means for storing user preferences.

The system may be used in conjunction with recording means, and content metadata may be employed to automatically record the multimedia content data associated with the metadata. The system may further comprise combining means to combine content metadata of one or more of the media types, and metadata may also be used to remind a user of contents related to one or more media types.

Furthermore, according to the present invention there is further provided an interactive multimedia processing method for use with a digital television service and for providing an output signal to a display, the method comprising the steps of:
parsing digital television service data into constituent data types;
processing the parsed data into multimedia content data according to its associated media type;
dividing an image to be displayed into regions; and
assigning the multimedia content data to different display regions according to its associated media type, such that the multimedia contents are presented in the form of image output data to a display.

One advantage of the multimedia processing system is that all of the contents related to a service can be displayed in the same screen - the user can see in one glance both the TV programme and associated services. There is therefore no need for the user to swap between views in order to assess his options.

A further advantage is that the system supports navigating between associated services; from a compartmentalised multimedia overview the user can access any multimedia content linked to a TV programme. The system allows the user to move to and access one window, then return to the overview screen and access another window, whilst viewing all of the available options.

The proposed system also allows the user to express a preference, as he can enlarge or remove regions according to his tastes. Additionally, the system is able to learn a complex user preference by combining metadata from TV programmes and supplementary content, in order to form a richer and individual user profile.

The present invention will now be described with reference to the accompanying drawings, in which:
Figure 1 is a hypothetical PMT for a multimedia TV service;
Figure 2 is a flow chart showing the procedure used by an interactive multimedia processing system in accordance with the present invention, to present a multimedia overview viewing mode;
Figure 3 shows an example of a complete overview of the display processed by the system of Figure 2;
Figure 4 shows a rearrangement of the display of Figure 3;
Figure 5 shows a rearrangement of the display of Figures 3 and 4.

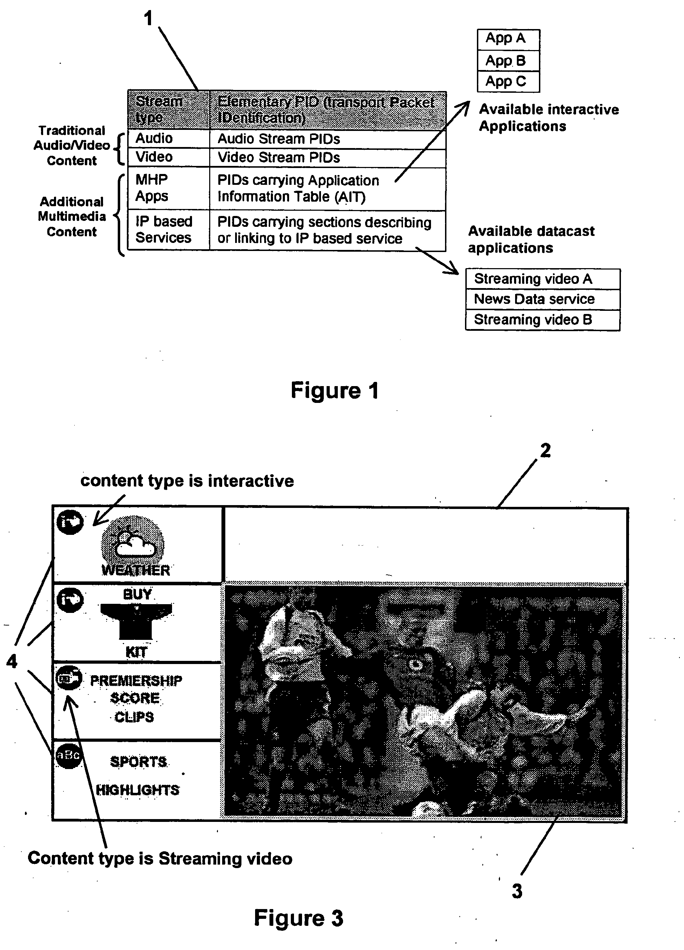

In a multimedia digital TV service, the different types of data which constitute different aspects of the service can be provided in an MPEG-2 Program Map Table (PMT) 1. Figure 1 shows a hypothetical PMT 1 for a multimedia TV service, in accordance with well-known protocol. For example, Multimedia Home Platform (MHP) applications can be signalled in the PMT 1 using the presence of an Application Information Table (AIT). The AIT contains brief descriptors available interactive applications, and where these applications can be found. Similarly, other types of content such as IP (Internet Protocol) based services, can be signalled in the PMT using MPEG-2 sections that carrying information about the location of the IP service.

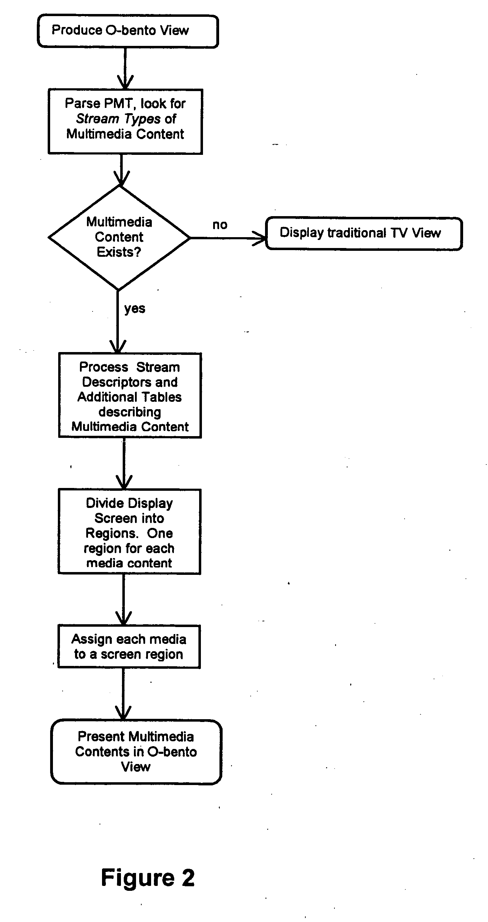

Figure 2 is a flow chart of the procedure used by an interactive multimedia processing system, in accordance with the invention, in order to produce a screen display. This compartmentalises the screen into regions or windows of different sizes, each of which contains one of the multimedia content of the TV service. The system knows what these elements are by processing the PMT 1 of the service. The system uses Stream Descriptors in the PMT 1 and/or parses further tables or link descriptors, in order to acquire information about available supplementary multimedia content. Such information may include 'Type of Media/Content', 'Content Title/Summary', 'Content Image/Icon", "How to retrieve and present content', and so on. The system then compartmentalises the display screen and assigns each media to one of the screen regions created. These may comprise a larger main region and various smaller regions. The multimedia contents can then be presented in the form of image output data to a screen display. In the case where the service has no multimedia content, a traditional television view will be displayed.

It may not be possible to simultaneously present all the contents at once (for example, play the audio/video and run multimedia applications), due to limitations in system resources. In this situation, the system will display a limited part of the supplementary multimedia content, for example, the title, summary, images/icons, and so on.

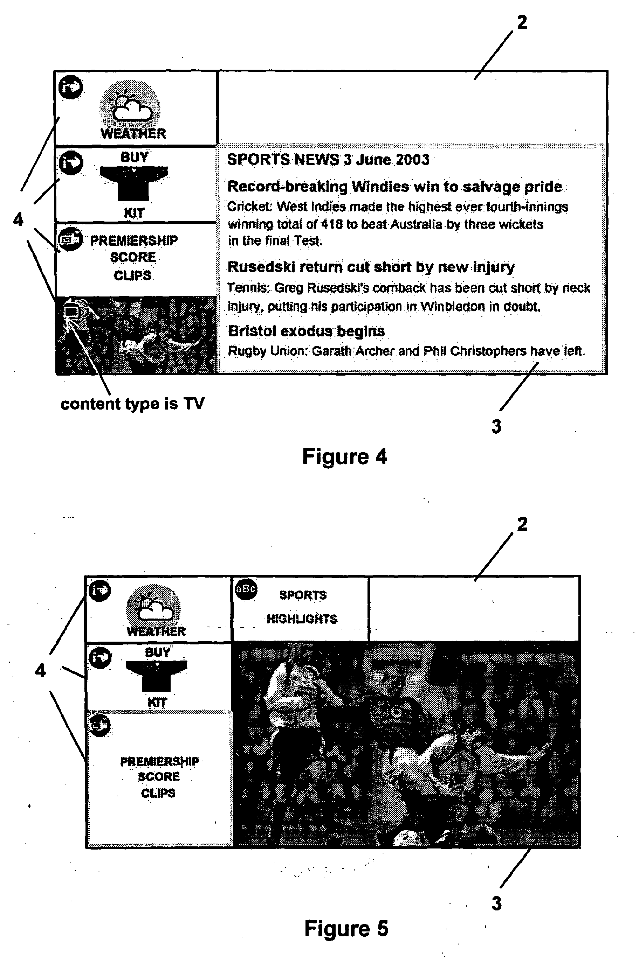

Referring now to figure 3, a multimedia screen display 2 provides that when the user selects a service (for example, choosing a programme in the Electronic Programme Guide or 'Channel Zapping'), a main region 3 displays the TV, whilst other smaller regions 4 display supplementary content. There will be a cursor on the main region 3. In this layout, the user can continue to watch in the overview mode, or he can instruct the system to display the TV programme in full-screen mode using an interactive device (such as a remote controller). Alternatively, the user is also able to navigate the display and select a supplementary content to display in the main region. The user may do this by moving the cursor to highlight another region, and instructing the system to set the new region to be the main service. The system will then rearrange the display.

Figure. 4 shows an example of figure 3 rearranged when the user selects the 'Sports Highlights' text content. In this example, the text content therefore occupies the main screen region 3. The system may need to stop presenting the TV programme so that resources can be used to present the chosen supplementary content. If this happens the system will either use a static image 5 (such as an I-picture) or a description to display the TV programme. The TV programme will be moved to a smaller region, and its content type will be indicated to the user. In the situation where the system has to tune in order to present the chosen supplementary content, the system will store or cache the PMT information of the TV service and any other information for retrieving or describing each supplementary content.

Additionally, the system will allow the user to personalise the overview layout, by enlarging or removing regions. Figure 5 shows the user interface when 'Premiership Score Clips" is enlarged. The user may do this by moving the cursor to the region and instructing the system to enlarge or remove the region. When the user personalises the overlay, the system also learns about the user's preference. For example, if the user likes the streaming video clip supplementing a football programme, he can enlarge the video clip region. When a region is enlarged, the display will be updated accordingly.

The system, using content metadata (information about one of the contents), can combine metadata of several of the contents to refine that user's preferences. In the above example, the system can combine 'Premiership Scores' with 'Manchester United' to form a richer user preference. The system could then use the information, for example, to automatically record information or to remind the user about contents regarding Manchester United's Premiership scores. Conversely, if the user always removes weather interactive applications, then the system is able to learn not to display such content in the future. Metadata may be acquired from TV-Anytime services or IP data broadcast service descriptions.

The present invention therefore provides an interactive multimedia processing system which is user-friendly and easy to navigate, and which allows the user to see a full range of multimedia service options on one screen display due to the compartmentalised view. The system allows the user to adapt the display according to his viewing preferences, and is able to learn complex display profiles by combining metadata from TV programmes and supplementary multimedia content.

## Claims

1. An interactive multimedia processing system for use with a digital television service and for providing an output signal to a display, the system comprising:
parsing means for parsing digital television service data into constituent data types;
processing means for processing the parsed data into multimedia content data according to its associated media type;
dividing means for dividing an image to be displayed into regions; and
assigning means for assigning the multimedia content data to different display regions according to its associated media type, such that the multimedia contents are presented in the form of image output data to a display.

2. The system of claim 1, wherein the digital service data is provided in the form of an MPEG-2 Programme Map Table (PMT).

3. The system of claim 1 or 2, wherein the display regions are of different sizes.

4. The system of any preceding claim, wherein the display regions include one main region on which a selected viewing mode is displayed.

5. The system of any preceding claim, wherein the system further comprises selection means for selecting a viewing mode.

6. The system of any preceding claim, wherein the system further comprises navigation means for enlarging, minimising or removing a selected region from the image output data.

7. The system of any preceding claim, wherein the system further comprises memory means for storing user preferences.

8. The system of any preceding claim, wherein the system is suitable for use with a recording means, and wherein content metadata is employed to automatically record the multimedia content data associated with the metadata.

9. The system of any preceding claim, wherein the system further comprises combining means to combine content metadata of one or more of the media types.

10. The system of any preceding claim, wherein content metadata is employed to remind a user of contents related to one or more media types.

11. An interactive multimedia processing method for use with a digital television service and for providing an output signal to a display, the method comprising the steps of:
parsing digital television service data into constituent data types;
processing the parsed data into multimedia content data according to its associated media type;
dividing an image to be displayed into regions; and
assigning the multimedia content data to different display regions according to its associated media type, such that the multimedia contents are presented in the form of image output data to a display.

12. The method of claim 11, wherein the digital service data is provided in the form of an MPEG-2 Programme Map Table (PMT).

13. The method of claim 11 or 12, wherein the display regions are of different sizes.

14. The method of any of claims 11 to 13, wherein the display regions include one main region on which a selected viewing mode is displayed.

15. The method of any of claims 11 to 14, wherein the method further comprises the selecting a viewing mode.

16. The method of any of claims 11 to 15, wherein the method further comprises the step of enlarging, minimising or removing a selected region from the image output data.

17. The method of any of claims 11 to 16, wherein the method further comprises memory means for storing user preferences.

18. The method of any of claims 11 to 17, wherein the method further includes the step of employing content metadata to automatical record the multimedia content data associated with the metadata.

19. The method of any of claims 11 to 18, wherein the method further comprises the step of combining content metadata of one or more of the media types.

20. The method of any of claims 11 to 19, further comprising the step of employing content metadata to remind a user of contents related to one or more media types.
